# EUROPÄISCHE PATENTSCHRIFT

(11) **EP 1 398 591 B1**
(45) Veröffentlichungstag und Bekanntmachung des Hinweises auf die Patenterteilung: **14.03.2012**
(21) Anmeldenummer: 03015917.2
(22) Anmeldetag: 12.07.2003
(51) Int. Cl.: F28D 20/00, F24H 9/20, F24D 19/10, F24D 11/00

(54) **Schichtenspeicher**
Accumulator with layers
Accumulateur stratifié

(30) Priorität: 18.07.2002 DE 10233246; 26.08.2002 AT 12682002
(43) Veröffentlichungstag der Anmeldung: 17.03.2004
(73) Patentinhaber: Vaillant GmbH, 42859 Remscheid (DE)
(72) Erfinder: Noll, Wolfgang, 42369 Wuppertal (DE)
(74) Vertreter: Hocker, Thomas

(56) Entgegenhaltungen:
- EP-A- 1 056 148
- EP-A- 1 098 142
- DE-A1- 1 753 294
- DE-A1- 1 779 233
- DE-A1- 10 010 498
- DE-A1- 19 645 138
- DE-U1- 29 717 741

## Beschreibung

Die Erfindung bezieht sich auf einen Schichtenspeicher mit mindestens einem Temperaturfühler sowie ein Verfahren zum Betreiben dieses Schichtenspeichers.

Schichtenspeicher zeichnen sich dadurch aus, dass in ihnen eine Temperaturschichtung stattfindet. Aus dem unteren Bereich wird kaltes Wasser entzogen, das aufgewärmt wird und in dem oberen Bereich dem Speicher wieder zugeführt wird. Hierdurch wird erreicht, dass der Speicher von oben nach unten mit warmem Wasser befüllt wird. In der Regel befindet sich in dem Schichtenspeicher ein Tauchrohr, durch welches ein oder mehrere Temperaturfühler eingeführt werden. Unterschreitet die Temperatur an einem Temperatursensor einen vorgegebenen Schwellwert, so ist dies das Signal dafür, dass der Speicher nachgeladen werden muß. Eine Wärmequelle erhitzt das im Speicher befindliche Wasser so lange, bis die Temperatur an einem Temperaturfühler einen vorgegebenen Temperaturwert übersteigt. Bei Wohnhäusern ist man bemüht, stets ein gewisses Warmwasservolumen zu bevorraten, dass sich auf einem vorgegebenen Temperaturniveau befindet. Dies ist das sogenannte Komforttemperaturvolumen. Ein Warmwasserspeicher ist in der Regel größer dimensioniert als dieses Komforttemperaturvolumen. Dies hat den Vorteil, dass beim Betrieb von Brennstoffzellenheizgeräten das restliche Wasservolumen kontinuierlich mit kleiner Last beheizt werden kann. Nachteile bisheriger Schichtenspeichersysteme gemäß dem Stand der Technik ist, dass das Komforttemperaturvolumen vorgegeben durch die Bauart ist und somit eine individuelle Anpassung an den konkreten häuslichen Bedarf nicht gegeben ist.

Die DE 297 17 741 U1 offenbart einen Speicher mit einem horizontalen Tauchrohr, in dem sich zwei Temperaturfühler befinden.

Die DE 1753294 A offenbart einen Speicher mit einem Temperaturfühler an einer Klemmschelle, welche mit Hilfe von Schrauben gelöst und befestigt wird. Somit ist zur Höheneinstellung eine Demontage der Einsätze notwendig, um die Klemmschelle in der Höhe verstellen zu können.

Die gattungsgemäße DE 196 45 138 A1 zeigt zwei Temperaturfühler in einem vertikalen Tauchrohr, wobei beide Temperaturfühler jeweils bis zum Anschlag eingeschoben sind.

Die DE 17 79 233 A1 zeigt einen Temperaturfühler, welcher durch vertikales Verschieben in einer Manschette auf verschiedenem Höhenniveau eingestellt werden kann. Die Manschette muss dichtend ausgelegt sein, um Flüssigkeitsaustritt zu vermeiden.

Der Erfindung liegt daher die Aufgabe zu Grunde, eine individuelle Einstellung des Komforttemperaturvolumens bedarfsgerecht zu ermöglichen. Erfindungsgemäß wird dies durch einen Schichtenspeicher gemäß Anspruch 1 erreicht. Das Höhenniveau des oder der Temperaturfühler ist einstellbar. Bei vorgegebener Querschnittsfläche des Warmwasserspeichers ergibt sich somit das Volumen durch die Multiplikation der Speichergrundfläche mit dem entsprechenden Abstand des Temperaturfühlers zur Speicheroberkante. Es ergibt sich der Vorteil, dass definierte Einstellhilfen gegeben sind.

Durch die Merkmale des Anspruches 2 werden Varianten dieser Einstellhilfen beschrieben. Äquivalent hierzu werden gemäß den Merkmalen des Anspruches 3 andere Möglichkeiten der Einstellung der Einstellhilfen aufgezeigt.

Gemäß den Merkmalen des abhängigen Anspruches 4 ergibt sich der Vorteil, dass eine weitere Möglichkeit der Wärmeeinbringung in den Warmwasserspeicher besteht. Dies ist vor allem für Wärmequellen mit geringer Wärmeleistung sinnvoll, da diese in den kalten Bereich besonders vorteilhaft Wärme abgeben können.

Gemäß den Merkmalen des Anspruches 5 ergibt sich der Vorteil, dass eine besonders sinnvolle Wärmequelle hierfür gegeben ist. Gemäß den Merkmalen des Anspruches 6 ergibt sich eine andere vorteilhafte Wärmequelle.

Gemäß den Merkmalen des Anspruches 7 werden Wärmequellen bezeichnet, die zum Laden des Schichtenspeichers auch bei hoher Leistung geeignet sind.

Gemäß den Merkmalen des Verfahrensanspruches 8 wird ein vorteilhaftes Verfahren zum Betreiben eines Schichtenspeichers mit mindestens einem Temperaturfühler beschrieben. Hierbei wird der Schichtenspeicher, sobald die Temperatur an einem ersten Temperaturfühler einen vorgegebenen Wert unterschreitet, mit hoher Wärmeabgabe erwärmt, bis die Temperatur an dem selben oder einem zweiten Temperaturfühler einen anderen vorgegebenen Wert überschreitet. Hierdurch wird ein rasches Erwärmen eines Komforttemperaturvolumens erreicht.

Gemäß den Merkmalen des abhängigen Anspruches 9 wird, nachdem die Temperatur an letztgenannten Temperaturfühler einen vorgegebenen Wert überschritten hat, der Schichtenspeicher nur noch langsam von einer Brennstoffzelle erwärmt. Dies hat den Vorteil, dass eine Brennstoffzelle nicht abgeschaltet werden muß, sondern mit geringerer Leistung betrieben wird, was lange Laufzeiten garantiert und somit den Verschleiß minimiert.

Gemäß den Merkmalen des Anspruches 10 wird die niedrige Wärmeabgabe über einen Wärmeaustauscher im unteren Bereich des Schichtenspeichers eingebracht. Somit muß die Wärmequelle nur ein relativ niedriges Temperaturniveau erreichen.

Gemäß den Merkmalen des Verfahrensanspruches 11 ist das Komforttemperaturvolumen durch Höhenverstellung des zweiten Temperaturfühlers einstellbar.

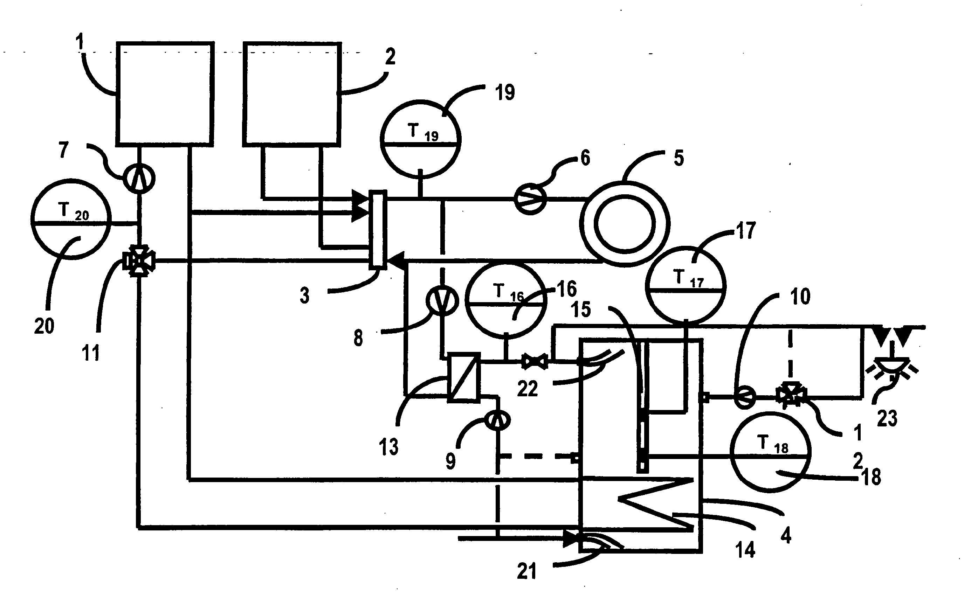

Die Erfindung wird nun anhand der Figur erläutert.

Die Figur zeigt einen erfindungsgemäßen Schichtenspeicher 4 mit einem Tauchrohr 15, in dem sich zwei Temperaturfühler 17, 18 auf unterschiedlichem Höhenniveau befinden. Der Schichtenspeicher 4 verfügt über einen Kaltwasseranschluss 21, über den einerseits kaltes Frischwasser zulaufen kann, andererseits kaltes Wasser aus dem Speicher entnommen werden kann, um erhitzt zu werden um anschließend über einen Warmwasserzulauf 22 im oberen Bereich wieder dem Speicher zugeführt werden zu können. Über den Warmwasserzulauf 22 kann ebenfalls warmes Wasser für eine Verbrauchsstelle 23 entnommen werden. Zwischen dem Kaltwasserzulauf 21 und dem Warmwasserzulauf 22 befindet sich eine Pumpe 9 und ein Wärmeaustauscher 13. Ferner befindet sich in dem Schichtenspeicher 4 ein Wärmeaustauscher 14, der mit einem Brennstoffzellenheizgerät 1 verbunden ist. Das Brennstoffzellenheizgerät 1 ist ebenfalls mit einer hydraulischen Weiche 3 verbunden. Mit dieser hydraulischen Weiche 3 ist auch ein Zusatzheizgerät 2 verbunden. Auf der Sekundärseite der hydraulischen Weiche 3 befindet sich ein Kreislauf mit einer Pumpe 6 und eine Heizkörperanordnung 5. Parallel dazu befindet sich ein Kreislauf mit einer Pumpe 8 und dem zuvor beschriebenen Wärmetauscher 13. Ein Umschaltventil 11 im Rücklauf des Brennstoffzellenheizgerätes ermöglicht ein Umschalten vom Kreislauf, der über die hydraulische Weiche 3 geht, zum Kreislauf, der über den Wärmeaustauscher 14 verläuft. Im Rücklauf des Brennstoffzellenheizgerätes befindet sich ein Temperaturfühler 20, im Vorlauf des Heizkreislaufes hinter der hydraulischen Weiche 3 befindet sich ein Temperaturfühler 19, und zwischen Wärmeaustauscher 13 und Warmwasserzulauf 22 des Schichtenspeichers 4 befindet sich ein Temperatursensor 16.

Fällt die Temperatur am Temperatursensor 17 unter einen vorgegebenen Schwellwert, so wird die Brennstoffzelle 1 mit hoher Wärmeabgabe betrieben. Die Wärme wird über die hydraulische Weiche 3 und den Wärmeaustauscher 13 dem oberen Bereich des Schichtenspeichers 4 über den Warmwasserzulauf 22 zugeführt, hierdurch wird zunächst der obere Bereich des Schichtenspeichers 4 erwärmt. Durch das zulaufende warme Wasser gelangt auch warmes Wasser in tiefere Regionen des Schichtenspeichers 4. Überschreitet die am Temperatursensor 18 gemessene Temperatur einen vorgegebenen Schwellwert, so ist dies ein Signal dafür, dass das Komforttemperaturvolumen gefüllt ist und somit die Leistung der Brennstoffzelle 1 reduziert werden kann. Nun wird das Umschaltventil 11 derart umgeschaltet, dass die geringere Wärmeabgabe der Brennstoffzelle 1 nicht mehr über den Wärmeaustauscher 13, sondern über den Wärmeaustauscher 14 in den unteren Bereich des Schichtenspeichers 4 eingebracht wird.

Soll das Komforttemperaturvolumen für einen geringen Warmwasserbedarf eingestellt werden, so muß der zweite Temperatursensor 18, der für das Abschalten zuständig ist, sich in einem relativ oberen Bereich des Schichtenspeichers 4 befinden. Mittels einer fest vorgegebenen oder einstellbaren Schablone kann der Temperatursensor 18 von oben durch das Tauchrohr 15 in den Speicher 4 eingebracht werden. Soll der Schichtenspeicher 4 für eine größere Wohneinheit Verwendung finden, so wird der Abstandshalter entnommen, entweder im verstellbaren Fall neu eingestellt oder im anderen Fall durch einen anderen Abstandshalter ersetzt, was letztendlich bewirkt, dass in eingebautem Zustand der zweite Temperatursensor 18 wesentlich weiter im unteren Bereich des Schichtenspeichers 4 positioniert wird. Hierdurch entsteht ein wesentlich größeres Komforttemperaturvolumen. Das Volumen unterhalb des Komforttemperaturvolumens dient hauptsächlich der Pufferung der Brennstoffzellenleistung. Je größer das Komforttemperaturvolumen ist, desto weniger kann bei vorgegebenem Speichervolumen gepuffert werden.

Die Figur zeigt ebenfalls, dass ein Zusatzheizgerät 2 vorgesehen sein kann, das vorwiegend dann eingesetzt wird, wenn die benötigte Heizleistung nicht von dem Brennstoffzellenheizgerät abgedeckt werden kann.

An Stelle eines Brennstoffzellenheizgerätes 1 kann alternativ ein nicht dargestellter Solarkollektor Verwendung finden, der kontinuierlich seine Wärmeleistung an den Speicher abgibt.

## Patentansprüche

1. Schichtenspeicher (4) mit Kaltwasseranschluss (21) im unteren Bereich des Schichtenspeichers (4), Warmwasserzulauf (22) im oberen Bereich des Schichtenspeichers (4) sowie einer Pumpe (9) sowie einem Wärmeaustauscher (13) zwischen Kaltwasseranschluss (21) und Warmwasserzulauf (22), mit mindestens einem Temperaturfühler (17, 18) in mindestens einem Tauchrohr (15), **dadurch gekennzeichnet, dass** das Höhenniveau des mindestens einen Temperaturfühlers (17, 18) im Schichtenspeicher (4) einstellbar ist und der Abstand des mindestens einen Temperaturfühlers (17, 18) zum oberen oder unteren Ende des Tauchrohrs (15) mit mindestens einem einstell- und/oder ersetzbaren Abstandshalter einstellbar ist.

2. Schichtenspeicher (4) mit mindestens einem Temperaturfühler (17, 18) gemäß Anspruch 1, **dadurch gekennzeichnet, dass** der mindestens eine Abstandshalter linear oder in Rasten einstellbar ist.

3. Schichtenspeicher (4) mit mindestens einem Temperaturfühler (17, 18) gemäß Anspruch 1, **dadurch gekennzeichnet, dass** der Abstand des mindestens einen Temperaturfühlers (17, 18) zum oberen oder unteren Ende des Tauchrohrs (15) durch den mindestens einen nicht einstellbaren Abstandshalter fest vorgegeben ist.

4. Schichtenspeicher (4) mit mindestens einem Temperaturfühler (17, 18) gemäß einem der Ansprüche 1 bis 3, **dadurch gekennzeichnet, dass** im unteren Bereich des Schichtenspeichers (4) ein weiterer Wärmeaustauscher (14) angeordnet ist.

5. Schichtenspeicher (4) mit mindestens einem Temperaturfühler (17, 18) gemäß Anspruch 4, **dadurch gekennzeichnet, dass** der Wärmeaustauscher (14) mit dem Wärmekreislauf einer Brennstoffzelle (1) verbunden ist.

6. Schichtenspeicher (4) mit mindestens einem Temperaturfühler (17, 18) gemäß Anspruch 4, **dadurch gekennzeichnet, dass** der Wärmeaustauscher (14) mit dem Wärmekreislauf eines Solarkollektors verbunden ist.

7. Schichtenspeicher (4) mit mindestens einem Temperaturfühler (17, 18) gemäß einem der Ansprüche1 bis 6, **dadurch gekennzeichnet, dass** der Schichtenspeicher (4) von einem Heizgerät (2), einer Brennstoffzelle (1) und / oder einem Solarkollektor erhitzt wird.

8. Verfahren zum Betreiben eines Schichtenspeicher (4) gemäß einem der Ansprüche 1 bis 7 mit mindestens einem höhenverstellbaren Temperaturfühler (17, 18) in mindestens einem Tauchrohr (15) und einer in der Wärmeabgabe veränderlichen Brennstoffzelle (1), **dadurch gekennzeichnet, dass** sobald die Temperatur an einem ersten Temperaturfühler (17) einen vorgegebenen unteren Schwellwert unterschritten hat, der Schichtenspeicher (4) von der Brennstoffzelle (1) mit hoher Wärmeabgabe erwärmt wird, bis die Temperatur an dem selben (17) oder einem zweiten Temperaturfühler (18) einen anderen vorgegebenen oberen Schwellwert überschreitet.

9. Verfahren zum Betreiben eines Schichtenspeicher (4) mit einer Brennstoffzelle (1) nach Anspruch 8, **dadurch gekennzeichnet, dass** nachdem die Temperatur am Temperaturfühler (17, 18), der für die Messung des oberen Schwellwertes zuständig ist, einen vorgegebenen oberen Schwellwert überschritten hat, der Schichtenspeicher (4) von der Brennstoffzelle (1) mit niedriger Wärmeabgabe erwärmt wird.

10. Verfahren zum Betreiben eines Schichtenspeicher (4) mit einer Brennstoffzelle (1) nach Anspruch 9, **dadurch gekennzeichnet, dass** der Schichtenspeicher (4) von der Brennstoffzelle (1) mit niedriger Wärmeabgabe über einen Wärmeaustauscher (14) im unteren Bereich des Schichtenspeichers (4) erwärmt wird.

11. Verfahren zum Betreiben eines Schichtenspeicher (4) mit einer Brennstoffzelle (1) nach einem der Ansprüche 8 bis 10, **dadurch gekennzeichnet, dass** das Komforttemperaturvolumen durch Höhenverstellung des Temperaturfühlers (17, 18), der für die Messung des oberen Schwellwertes zuständig ist, einstellbar ist.

## Claims

1. Stratified storage tank (4) comprising a cold water connection (21) in the lower region of the stratified storage tank (4), a hot water feed (22) in the upper region of the stratified storage tank (4) and a pump (9) as well as a heat exchanger (13) between the cold water connection (21) and the hot water feed (22), comprising at least one temperature sensor (17, 18) in at least one immersion pipe (15), **characterised in that** the height of the at least one temperature sensor (17, 18) in the stratified storage tank (4) is adjustable and the distance of the at least one temperature sensor (17, 18) from the upper or lower end of the immersion pipe (15) can be adjusted using at least one adjustable and/or replaceable spacer.

2. Stratified storage tank (4) comprising at least one temperature sensor (17, 18) according to claim 1, **characterised in that** the at least one spacer is adjustable linearly or in notches.

3. Stratified storage tank (4) comprising at least one temperature sensor (17, 18) according to claim 1, **characterised in that** the distance of the at least one temperature sensor (17, 18) from the upper or lower end of the immersion pipe (15) is predefined in a fixed manner by the at least one unadjustable spacer.

4. Stratified storage tank (4) comprising at least one temperature sensor (17, 18) according to any one of claims 1 to 3, **characterised in that** a further heat exchanger (14) is arranged in the lower region of the stratified storage tank (4).

5. Stratified storage tank (4) comprising at least one temperature sensor (17, 18) according to claim 4, **characterised in that** the heat exchanger (14) is connected to the heat circuit of a fuel cell (1).

6. Stratified storage tank (4) comprising at least one temperature sensor (17, 18) according to claim 4, **characterised in that** the heat exchanger (14) is connected to the heat circuit of a solar collector.

7. Stratified storage tank (4) comprising at least one temperature sensor (17, 18) according to any one of claims 1 to 6, **characterised in that** the stratified storage tank (4) is heated by a heating apparatus (2), a fuel cell (1) and/or a solar collector.

8. Method for operating a stratified storage tank (4) according to any one of claims 1 to 7, comprising at least one height-adjustable temperature sensor (17, 18) in at least one immersion pipe (15) and a fuel cell (1) of which the heat output is variable, **characterised in that** as soon as the temperature at a first temperature sensor (17) has fallen below a predefined lower threshold value, the stratified storage tank (4) is heated by the fuel cell (1) with a high heat output until the temperature at said sensor (17) or at a second temperature sensor (18) exceeds another predefined upper threshold value.

9. Method for operating a stratified storage tank (4) comprising a fuel (1) according to claim 8, **characterised in that** once the temperature at the temperature sensor (17, 18), which is responsible for the measurement of the upper threshold value, has exceeded a predefined upper threshold value, the stratified storage tank (4) is heated by the fuel cell (1) with a low heat output.

10. Method for operating a stratified storage tank (4) comprising a fuel cell (1) according to claim 9, **characterised in that** the stratified storage tank (4) is heated by the fuel cell (1) with a low heat output via a heat exchanger (14) in the lower region of the stratified storage tank (4).

11. Method for operating a stratified storage tank (4) comprising a fuel cell (1) according to any one of claims 8 to 10, **characterised in that** the comfort temperature volume is adjustable by moving the height of the temperature sensor (17, 18), which is responsible for the measurement of the upper threshold value.

## Revendications

1. Réservoir de stockage stratifié (4) comprenant un raccordement à eau froide (21) dans la région inférieure du réservoir de stockage stratifié (4), un apport d'eau chaude (22) dans la région supérieure du réservoir de stockage stratifié (4) et une pompe (9) ainsi qu'un échangeur de chaleur (13) entre le raccordement à eau froide (21) et l'apport d'eau chaude (22), comprenant au moins un capteur de température (17, 18) dans au moins un tuyau d'immersion (15), **caractérisé en ce que** la hauteur d'au moins un capteur de température (17, 18) dans le réservoir de stockage stratifié (4) est ajustable et la distance d'au moins un capteur de température (17, 18) depuis l'extrémité supérieure ou inférieure du tuyau d'immersion (15) peut être ajustée en utilisant au moins un séparateur ajustable et/ou remplaçable.

2. Réservoir de stockage stratifié (4) comprenant au moins un capteur de température (17, 18) selon la revendication 1, **caractérisé en ce qu'**au moins un séparateur soit ajustable de façon linéaire ou par crans.

3. Réservoir de stockage stratifié (4) comprenant au moins un capteur de température (17, 18) selon la revendication 1, **caractérisé en ce que** la distance d'au moins un capteur de température (17, 18) de l'extrémité supérieure ou inférieure du tuyau d'immersion (15) est prédéfinie de manière fixe par au moins un séparateur non ajustable.

4. Réservoir de stockage stratifié (4) comprenant au moins un capteur de température (17, 18) selon l'une quelconque des revendications 1 à 3, **caractérisé en ce qu'**un échangeur de chaleur (14) supplémentaire est disposé dans la région inférieure du réservoir de stockage stratifié (4).

5. Réservoir de stockage stratifié (4) comprenant au moins un capteur de température (17, 18) selon la revendication 4, **caractérisé en ce que** l'échangeur de chaleur (14) est connecté au circuit thermique d'une pile à (1).

6. Réservoir de stockage stratifié (4) comprenant au moins un capteur de température (17, 18) selon la revendication 4, **caractérisé en ce que** l'échangeur de chaleur (14) est connecté au circuit thermique d'un capteur solaire.

7. Réservoir de stockage stratifié (4) comprenant au moins un capteur de température (17, 18) selon l'une quelconque des revendications 1 à 6, **caractérisé en ce que** le réservoir de stockage stratifié (4) est chauffé par un appareil de chauffage (2), une pile à combustible (1) et/ou un capteur solaire.

8. Méthode de fonctionnement d'un réservoir de stockage stratifié (4) selon l'une quelconque des revendications 1 à 7, comprenant au moins un capteur de température à hauteur ajustable (17, 18) dans au moins un tuyau d'immersion (15) et une pile à combustible (1) dont la sortie de chaleur est variable, **caractérisée en ce que** dès que la température à un premier capteur de température (17) est tombée en dessous d'une valeur de seuil inférieur prédéfinie, le réservoir de stockage stratifié (4) est chauffé par la pile à combustion (1) avec une sortie de chaleur élevée jusqu'à ce que la température audit capteur (17) ou à un second capteur de température (18) dépasse une autre valeur de seuil supérieur prédéfinie.

9. Méthode de fonctionnement d'un réservoir de stockage stratifié (4) comprenant un carburant (1) selon la revendication 8, **caractérisé en ce qu'**une fois que la température au capteur de température (17, 18), qui est responsable de la mesure de la valeur de seuil supérieur, a dépassé une valeur de seuil supérieur, le réservoir de stockage stratifié (4) est chauffé par la pile à combustible (1) avec une faible sortie de chaleur.

10. Méthode de fonctionnement d'un réservoir de stockage stratifié (4) comprenant une pile à combustible (1) selon la revendication 9, **caractérisé en ce que** le réservoir de stockage stratifié (4) est chauffé par la pile à combustible (1) avec une faible sortie de chaleur via l'échangeur de chaleur (14) dans la région inférieure du réservoir de stockage stratifié (4).

11. Méthode de fonctionnement d'un réservoir de stockage stratifié (4) comprenant une pile à combustible (1) selon l'une quelconque des revendications 8 à 10, **caractérisé en ce que** le volume de la température de confort est ajustable en bougeant la hauteur du capteur de température (17, 18) qui est responsable de la mesure de la valeur de seuil supérieur.
